# FASCICULE DE BREVET EUROPEEN

(11) **EP 3 921 193 B1**
(45) Date de publication et mention de la délivrance du brevet: **06.03.2024**
(21) Numéro de dépôt: 20707725.6
(22) Date de dépôt: 05.02.2020
(51) Int. Cl.: B60H 1/00

(54) **DISPOSITIF DE CHAUFFAGE, VENTILATION ET/OU CLIMATISATION POUR VEHICULE AUTOMOBILE**
HEIZUNGS-, LÜFTUNGS- UND/ODER KLIMATISIERUNGSVORRICHTUNG FÜR EIN KRAFTFAHRZEUG
HEATING, VENTILATION AND/OR AIR-CONDITIONING DEVICE FOR A MOTOR VEHICLE

(30) Priorité: 07.02.2019 FR 1901216; 07.02.2019 FR 1901217
(43) Date de publication de la demande: 15.12.2021
(73) Titulaire: Valeo Systemes Thermiques, 78320 Le Mesnil-Saint-Denis (FR)
(72) Inventeur: PIERRES, Philippe, 78320 LE MESNIL SAINT-DENIS (FR); BARBIER, Thierry, 78320 LE MESNIL SAINT-DENIS (FR); VAN SCHAMMELHOUT, Cédric, 78320 LE MESNIL SAINT-DENIS (FR); VARELA, Nestor, 78322 LE MESNIL SAINT-DENIS CEDEX (FR); UMMIDI, Naveenkumar, Chennai, Tamil Nadu 600130 (IN)
(74) Mandataire: Valeo Systèmes Thermiques
(86) Numéro de dépôt international: PCT/FR2020/050201
(87) Numéro de publication internationale: WO 2020/161439

(56) Documents cités:
- EP-A1- 1 634 735
- EP-A1- 2 048 009
- DE-A1- 10 313 565
- FR-A1- 3 054 489
- FR-A1- 3 058 361

## Description

L'invention concerne le domaine des dispositifs de chauffage, ventilation et/ou climatisation pour véhicule automobile ainsi qu'un véhicule automobile comprenant un tel dispositif.

Un véhicule automobile est couramment équipé d'un dispositif de ventilation, de chauffage et/ou de climatisation pour réguler les paramètres aérothermiques d'un flux d'air distribué vers l'intérieur de l'habitacle du véhicule. Le dispositif comprend généralement un boîtier délimité par des cloisons dans lesquelles sont ménagées des ouvertures, dont au moins une entrée d'air et au moins une sortie d'air.

De façon connue, le boîtier loge un pulseur pour faire circuler le flux d'air depuis l'entrée d'air vers la sortie d'air. Le boîtier loge aussi des moyens de traitement thermique pour réchauffer et/ou refroidir le flux d'air préalablement à sa distribution à l'intérieur de l'habitacle. A titre d'exemple, les moyens de traitement thermique peuvent comprendre un évaporateur qui est destiné à refroidir et déshumidifier le flux d'air le traversant, ainsi qu'un radiateur, éventuellement associé à un radiateur additionnel, qui est destiné à réchauffer le flux d'air qui le traverse.

Il est connu, dans ces dispositifs, d'avoir un évaporateur disposé en aval de l'entrée d'air, de sorte que la totalité du flux d'air entrant à l'intérieur du boîtier soit déshumidifié par l'évaporateur. Puis, le flux d'air froid ainsi généré est admis dans une chambre de mixage principale et/ou orienté vers un organe de chauffage, notamment un radiateur et éventuellement un radiateur additionnel, pour obtenir un flux d'air chaud. La chambre de mixage principale sert à mélanger un ou plusieurs flux d'air froid et/ou chaud de sorte que le flux d'air issu du mélange, ayant la température de consigne souhaitée, soit distribué vers des zones spécifiques de l'habitacle du véhicule automobile. La chambre de mixage principale est pourvue d'au moins un organe de mixage afin de définir la proportion du flux d'air froid et du flux d'air chaud issu de la chambre de chauffage pénétrant dans la chambre de mixage principale. Cet organe permet ainsi d'ajuster la température du flux d'air mélangé destiné à être distribué dans la(es) zone(s) dédiées de l'habitacle, comme par exemple les zones avant et arrière, ou gauche et droite dans l'habitacle du véhicule automobile.

Bien qu'un tel dispositif de chauffage, ventilation et/ou climatisation permette de réaliser une gestion aéraulique pour plusieurs zones du véhicule, il existe toutefois de nombreuses contraintes en termes de volume et de poids pour ces dispositifs. En effet, les dispositifs de chauffage, ventilation et/ou climatisation sont généralement disposés sous la planche de bord du véhicule automobile, ceci implique le rehaussement des planches de bord limitant ainsi la visibilité du conducteur.

La présente invention vise à optimiser l'encombrement stérique vertical d'un dispositif de chauffage, ventilation et/ou climatisation.

Pour cela, l'invention propose un dispositif de chauffage, ventilation et/ou climatisation pour véhicule automobile suivant les caractéristiques de la revendication 1.

. De cette manière, l'invention permet d'avoir un dispositif de chauffage, ventilation et/ou climatisation moins encombrant que ceux de l'art antérieur. En effet, le fait d'agencer deux volets comprenant des portes coulissantes à des emplacements différents du dispositif de chauffage, ventilation et/ou climatisation permet de limiter de manière optimale la hauteur dudit dispositif.

Des modes de réalisations particuliers selon l'invention proposent que :
a. le deuxième volet de distribution est agencé de manière à pouvoir obturer le conduit d'air de sortie configuré pour guider le flux d'air vers une buse de ventilation ;
b. un premier volet de distribution comprenant un volet de type drapeau est agencé de manière à pouvoir obturer au moins partiellement un deuxième desdits conduits de sortie d'air ;
c. le deuxième conduit de sortie d'air est configuré pour guider un flux d'air vers une buse destiné à déboucher dans l'habitacle au niveau des pieds des passagers du véhicule ;
d. un troisième volet de distribution comprenant un volet de type papillon est agencé de manière à pouvoir obturer au moins partiellement un troisième desdits conduits de sortie d'air ;
e. le troisième conduit de sortie d'air est configuré pour guider un flux d'air vers la buse de dégivrage ;
f. le conduit de sortie d'air est défini d'une part par une paroi du boîtier définissant le canal d'écoulement et d'autre part par une autre paroi externe agencée à l'extérieur du canal d'écoulement ;
g. la buse est agencée en dessous du premier échangeur de chaleur par rapport à l'axe vertical Z ;
h. le boitier comprend une entrée d'air et ledit conduit de sortie d'air est agencé sur la partie du boitier opposée à ladite entrée d'air.

L'invention concerne également un véhicule automobile comprenant un dispositif de chauffage, ventilation et/ou climatisation tel que décrit précédemment.

Un aspect selon l'invention prévoit que lequel le deuxième échangeur de chaleur est agencé de manière sensiblement horizontale par rapport au véhicule à l'état monté et que le premier échangeur de chaleur est agencé de manière sensiblement verticale par rapport au véhicule à l'état monté.

D'autres caractéristiques et avantages de l'invention ressortiront à la lecture de la description qui suit, en référence aux figures annexées, qui illustrent :

La [Fig. 1] illustre une vue en perspective du dispositif de chauffage, ventilation et/ou climatisation selon l'invention ;

La [Fig. 2] illustre une vue de profil d'une partie du dispositif de chauffage, ventilation et/ou climatisation selon l'invention ;

La [Fig. 3] illustre une vue en perspective d'une partie du dispositif de chauffage, ventilation et/ou climatisation.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Les termes « amont » et « aval » sont toujours en référence par rapport à l'écoulement d'un flux d'air circulant au sein du dispositif de chauffage, ventilation et/ou climatisation

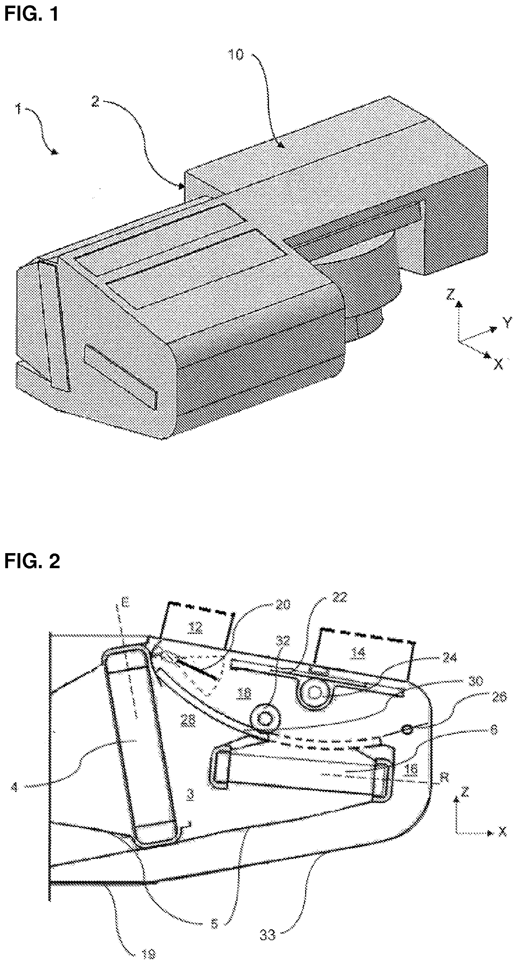

Sur les [Fig. 1] et [Fig. 4] est schématisé un trièdre XYZ où un axe longitudinal X du dispositif 1 de chauffage, ventilation et/ou climatisation peut correspondre à l'axe longitudinal avant/arrière du véhicule. Un axe transversal Y du dispositif 1 de chauffage, ventilation et/ou climatisation peut correspondre à l'axe transversal droite/gauche du véhicule, et un axe vertical Z du dispositif 1 de chauffage, ventilation et/ou climatisation peut correspondre à l'axe vertical haut/bas du véhicule, chaque axe étant perpendiculaire les uns aux autres notamment lorsque le dispositif 1 de chauffage, ventilation et/ou climatisation est installé dans le véhicule automobile.

Pour obtenir un dispositif de chauffage, ventilation et/ou climatisation avec un faible encombrement stérique vertical, l'invention telle qu'illustrée à la [Fig. 1], l'invention propose un dispositif 1 de chauffage, ventilation et/ou climatisation comprenant un boîtier 2 de forme allongée définissant un canal d'écoulement pour un flux air destiné à être distribué dans l'habitacle dans lequel sont logés des moyens de traitement thermique du flux d'air. Autrement dit, tel qu'illustré en [Fig. 2], le boîtier 2 définit grâce à des parois 5 un canal d'écoulement 3, ou un conduit d'écoulement, pour véhiculer un flux d'air depuis une entrée d'air jusqu'à une sortie d'air.

Les moyens de traitement thermique comprennent un premier échangeur de chaleur 4, par exemple un évaporateur, destiné à refroidir et déshumidifier l'intégralité du flux d'air circulant dans le canal d'écoulement 3.

Les moyens de traitement thermique comprennent également un deuxième échangeur de chaleur 6, exemple un radiateur, destiné à réchauffer une partie du flux d'air circulant dans le dispositif 1 de chauffage, ventilation et/ou climatisation, et est agencé en aval, par rapport à l'écoulement du flux d'air, du premier échangeur de chaleur 4. Le deuxième échangeur de chaleur 6 peut éventuellement être couplé à un radiateur électrique additionnel destiné à réchauffer le flux d'air de manière plus rapide, notamment lors du démarrage du véhicule.

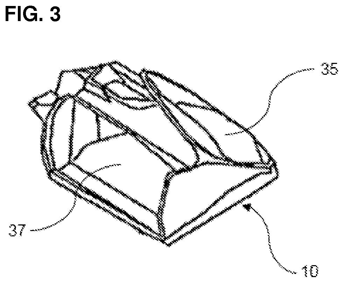

Le flux d'air est introduit dans le boîtier 2 par l'intermédiaire d'au moins une entrée d'air 10 puis est dirigé par l'intermédiaire d'un pulseur qui comprend pour cela un moteur et une roue à pales. Le pulseur achemine le flux d'air depuis l'entrée d'air 10 jusqu'à au moins une sortie, après avoir que celui-ci ait été traité thermiquement par les échangeurs de chaleur 4, 6. L'entrée d'air 10 correspond à un boîtier d'entrée d'air comprenant deux ouvertures, une entrée d'air extérieur 35 et une entrée d'air de recyclage 37 comme illustré en [Fig. 3].Un volet peut être agencé entre les deux ouvertures pour obturer au moins partiellement chacune. L'entrée d'air 10 est agencée sur la partie supérieure par rapport à l'axe vertical Z du dispositif de chauffage, ventilation et/ou climatisation.

La sortie comprend plusieurs conduits de sortie illustrés en [Fig. 2] distribuant les flux d'air vers des buses débouchant dans différentes régions de l'habitacle. Chaque conduit de sortie d'air comprend une bouche correspondant à l'entrée du conduit de sortie d'air. La sortie comprend notamment un premier conduit de sortie d'air 12 configuré pour mener le flux d'air vers la buse de dégivrage permettant ainsi de désembuer le pare-brise. La sortie comprend en outre un deuxième conduit de sortie d'air 14 apte à amener le flux d'air vers la buse de ventilation latéraux/centraux permettant ainsi de refroidir/réchauffer les passagers du véhicule. Enfin, la sortie comprend un troisième conduit de sortie d'air 16 orientant le flux d'air vers la buse pied permettant de refroidir/réchauffer les pieds des passagers avant du véhicule. Comme illustrées sur la [Fig. 2], les entrées de deux conduits de sortie 12,14 aptes à mener le flux d'air vers les buses de ventilation et de dégivrage sont coplanaires. En d'autres termes, les entrées de ces deux conduits 12,14 sont inscrites dans un même plan.

Le troisième conduit de sortie d'air 16 présente une forme particulière où le conduit longe le canal d'écoulement 3 en partie inférieure, par rapport à l'axe vertical Z du dispositif 1 de chauffage, ventilation et/ou climatisation. On peut aussi dire que le conduit de sortie d'air 16 est agencé sur la partie du boîtier 2 opposée à l'entrée d'air 10, ou que le conduit de sortie d'air 16 longe la surface inférieure, ou externe, du boîtier 2 du dispositif 1 de chauffage, ventilation et/ou climatisation, plus précisément le conduit de sortie d'air 16 longe la surface inférieure de la paroi 5 du boîtier 2 définissant le canal d'écoulement 3. La paroi 5 comprend une surface interne définissant un volume interne correspondant au canal d'écoulement 3 et une surface externe agencé à l'extérieur du canal d'écoulement 3, le conduit de sortie d'air 16 longe la surface externe de ladite paroi 5. Comme illustré en [Fig. 2], le troisième conduit de sortie d'air 16 s'étend depuis une chambre de mixage 18 qui sera décrite ultérieurement jusqu'à une buse 19, correspondant à la sortie dudit troisième conduit 16, débouchant dans la zone des pieds de l'habitacle. Ladite buse 19 est agencée en dessous du premier échangeur de chaleur 4 par rapport à l'axe vertical Z. En d'autres termes, le troisième conduit de sortie d'air 16 comprend une bouche d'entrée agencée au niveau de la zone de mixage 18, ledit conduit 16 s'étend alors le long des parois 5 du boîtier 2, on peut aussi dire que le conduit est juxtaposé, ou assujetti, au paroi 5 du boîtier 2 de manière à véhiculer le flux d'air dans une direction sensiblement opposée à la direction du flux d'air traversant le premier échangeur de chaleur 4, enfin ledit conduit 16 amène le flux d'air jusqu'à une buse 19 agencé en dessous de l'évaporateur 4. On peut également dire que le conduit de sortie d'air 16 oriente le flux d'air depuis la chambre de mixage 18 jusqu'au tablier, ou la paroi pare-feu, du véhicule. On peut aussi définir le conduit de sortie d'air 16 comme acheminant le flux d'air depuis la chambre de mixage jusqu'à la partie du boîtier 2 opposée à la chambre de mixage 18, ou jusqu'à la paroi du boîtier 2 où est agencée l'entrée d'air 10. On comprend ainsi que le conduit de sortie d'air 16 est défini d'une part par une paroi 5 du boitier 2 définissant le canal d'écoulement 3 et d'autre part par une autre paroi externe 33 agencée à l'extérieur du canal d'écoulement 3. Le canal d'écoulement 3 est défini ici par les parois 5 du boitier 2 et s'étend depuis l'entrée d'air 10 jusqu'à la chambre de mixage 18 incluse. La sortie 19 du troisième conduit de sortie d'air 16 et le premier échangeur de chaleur 4 sont inscrits dans les même plans transversal Y et longitudinal X et sont décalés par rapport à l'axe vertical Z du dispositif 1 de chauffage, ventilation et/ou climatisation. On peut également dire que la buse 19 est agencé en dessous de l'évaporateur par rapport à la direction d'extension de l'évaporateur 4. Pour cela, le conduit de sortie d'air 16 comprend au moins un coude.

Bien évidemment, l'invention ne se limite pas à ce mode de réalisation précis. La sortie 19 du troisième conduit de sortie d'air 16 et le premier échangeur de chaleur 4 sont inscrits dans des plans transversal Y et longitudinal X proches et sont décalés par rapport à l'axe vertical Z du dispositif 1 de chauffage, ventilation et/ou climatisation comme illustré en [Fig. 2]. On entend par « proche » comme quoi l'évaporateur 4 et la sortie 19 du troisième conduit de sorti 16 sont tous les deux agencés dans une même moitié, notamment un même quart, du dispositif 1 de chauffage, ventilation et/ou climatisation selon l'axe longitudinal X.

Un volet de distribution est agencé au niveau de chaque bouche, ou entrée, des conduits de sortie d'air 12,14, 16. Chaque volet de distribution est configuré pour passer d'une configuration où il obture intégralement chaque entrée de conduit de sortie d'air à une configuration où il permet le flux d'air de circuler intégralement au sein du conduit de sortie d'air correspondant. Bien évidemment, chaque volet de distribution est apte à adopter toute position intermédiaire.

Un premier volet de distribution 20 de type drapeau, correspondant à une porte avec un arbre de rotation agencée à une des extrémités de la porte, est agencé au niveau de l'entrée du premier conduit de sortie d'air 12. Un deuxième volet de distribution 22 de type coulissant, correspondant à une porte coulissante sur laquelle est agencée au moins une crémaillère. Afin de mettre le deuxième volet de distribution 22 en mouvement, au moins un engrenage 24 complémentaire à la crémaillère est mis en rotation autour d'un axe par un actionneur non illustré. La rotation de l'engrenage 44 entraîne le mouvement en translation de la porte coulissante 22 entre deux positions extrêmes, une première position extrême où le deuxième volet de distribution 22 obture la bouche d'entrée du deuxième conduit de sortie d'air 14 et une seconde position extrême où le deuxième volet de distribution 22 permet au flux d'air froid issu de la chambre de mixage 18 d'accéder au sein du deuxième conduit de sortie d'air 14. Un troisième volet de distribution 26 papillon, correspondant à un volet avec un arbre de rotation et une ou deux pales agencées de part et d'autre de l'arbre de rotation, est agencé au niveau de l'entrée du troisième conduit de sortie d'air 16 et permet d'obturer ou non le troisième conduit de sortie d'air 16.

Le premier échangeur de chaleur 4 comprend deux chambres collectrices et un faisceau thermique comprenant un ensemble de tubes ou plaques et on considère ici que le faisceau thermique définit un plan E. Le deuxième échangeur de chaleur 6 comprend deux chambres collectrices et un faisceau thermique comprenant un ensemble de tubes ou plaques et on considère ici que le faisceau thermique définit un plan R.

Afin de gain en hauteur, le deuxième échangeur de chaleur 6 est inscrit dans un plan R qui est orthogonal au plan P de l'entrée d'air de la volute. En d'autres termes, le deuxième échangeur de chaleur 6 s'inscrit dans un plan R sensiblement parallèle à l'axe de rotation du pulseur. En se référant par rapport aux véhicule, le plan E du premier échangeur de chaleur 4 correspond sensiblement au plan définit par les axes transversal et vertical YZ du véhicule tandis que le plan R du deuxième échangeur de chaleur 6 correspond sensiblement au plan définit par les axes longitudinal et transversal XY du véhicule. Autrement dit, le deuxième échangeur de chaleur 6 est agencé sensiblement à l'horizontal par rapport au dispositif 1 de chauffage, ventilation et/climatisation ou encore par rapport au véhicule une fois à l'état installé. Ceci permet donc un gain considérable en hauteur.

Afin de limiter les contraintes stériques encore plus, l'angle entre le plan E du premier échangeur de chaleur 4 et le plan R du deuxième échangeur de chaleur 6 est compris dans un intervalle allant de [40° à 120°]. Selon un mode de réalisation particulier, les premier et deuxièmes échangeur de chaleur 4,6 sont inscrits dans des plans sensiblement orthogonaux, et plus particulièrement dans des plans orthogonaux.

Selon l'invention, le dispositif 1 comprend un conduit d'évacuation permettant de guider les condensats vers l'extérieur du boîtier 2. Afin de réduire la hauteur du dispositif, le conduit d'évacuation est de forme aplatie et s'étend dans une direction sensiblement parallèle au plan R du deuxième échangeur de chaleur 6. En d'autres termes, le conduit d'évacuation présente un canal d'écoulement ayant une section de forme oblongue, comme illustré ici, ou toute autre forme dont la largueur dépasse la hauteur telle que elliptique, rectangulaire, *etc.*

Le flux d'air entrant au sein du boitier est véhiculé depuis l'entrée d'air 10 à travers une volute correspondant à une partie du boitier en spirale. La volute présente une entrée d'air correspondant à un orifice présent au sein du boitier, aussi appelé carter, en spirale. La volute présente une évolution radiale en partant d'un point N appelé le nez de la volute, sur une gamme d'angle pouvant aller de 0° à 360°. La volute présente ensuite une sortie de volute ayant la forme d'un conduit rectiligne de manière à ce que le flux d'air sortant de la volute suive cette même forme. Le flux d'air débouche alors dans une partie appelée le divergent qui correspond à une partie du canal d'écoulement 3 rectiligne ayant un agrandissement en hauteur selon l'axe Z. Le flux d'air s'écoule à travers le divergent jusqu'au premier échangeur de chaleur 4.

Une fois que le flux d'air a été refroidi par le premier échangeur de chaleur 4, il est guidé au sein du canal d'écoulement 3 vers le deuxième échangeur de chaleur 6. Selon le mode de réalisation illustré à la [Fig. 2], pour garantir que le flux d'air froid, issu du premier échangeur de chaleur 4, ne soit pas thermiquement contaminé par le deuxième échangeur de chaleur 6, le dispositif 1 comprend en un chemin de contournement 28 du deuxième échangeur de chaleur 6. Ainsi, le flux d'air froid, ayant traversé le premier échangeur de chaleur 4, circule soit à travers le deuxième échangeur de chaleur 6 pour être réchauffé, soit contourne le deuxième échangeur de chaleur 6 par le chemin de contournement 28 afin de conserver sa basse température.

Les flux d'air chaud et froid sont alors orientés en direction d'une zone de mixage 18 pour y être mélangés et distribués vers les bouches, ou entrées, des conduits de sortie 12,14,16 aux températures consignées. Pour réaliser ce mélange dans des proportions variables, le dispositif 1 comprend un volet de mixage 30 permettant de réguler la proportion de flux d'air froid passant par le deuxième échangeur de chaleur 6 et la proportion de flux d'air froid passant par le chemin de contournement 28.

Le volet de mixage 30 correspond à un volet de type coulissant, c'est-à-dire qu'il comprend une porte coulissante sur laquelle est agencée au moins une crémaillère. Afin de mettre le volet de mixage 30 en mouvement, au moins un engrenage 32 complémentaire à la crémaillère est mis en rotation autour d'un axe par un actionneur non illustré. La rotation de l'engrenage 32 entraîne le mouvement en translation de la porte coulissante 30 entre deux positions extrêmes, une première position extrême où le volet de mixage obture intégralement le chemin de contournement 28 du deuxième échangeur de chaleur 6 et une seconde position extrême où le volet de mixage 30 obture le passage d'air en aval du deuxième échangeur de chaleur 6 de manière à ce que le flux d'air air ayant traversé le deuxième échangeur de chaleur 6 ne puisse pas accéder à la chambre de mixage 18.

Le volet de mixage 30 tel qu'illustré en [Fig. 2] est agencé en aval du deuxième échangeur de chaleur 6, toutefois, celui peut être agencé entre le premier et le deuxième échangeur de chaleur 4,6.

L'invention telle qu'elle vient d'être décrite ne saurait se limiter aux moyens et configurations exclusivement décrits pour un exemple de réalisation particulier, et s'applique également à toutes combinaisons de ces moyens ou configurations, en restant dans le cadre défini par les revendications.

## Revendications

1. Dispositif (1) de chauffage, ventilation et/ou climatisation pour véhicule automobile, comprenant un boîtier (2) définissant un canal d'écoulement (3) pour un flux d'air, dans lequel sont agencés un premier échangeur de chaleur (4), un deuxième échangeur de chaleur (6), le premier (4) et le deuxième (6) échangeurs de chaleur étant inscrits dans des plans sensiblement orthogonaux, un chemin de contournement (28) du deuxième échangeur de chaleur (6) et au moins un conduit de sortie d'air (12,14,16), chaque conduit de sortie d'air (12,14,16) étant configuré pour guider le flux d'air notamment vers différentes régions d'un habitacle de véhicule, **caractérisé en ce qu'**un volet de mixage (30) comprenant une porte coulissante est agencé dans le canal d'écoulement (3) de manière à pouvoir obturer le chemin de contournement (28) et/ou le deuxième échangeur de chaleur (6) et un deuxième volet de distribution (22) comprenant une porte coulissante est agencé de manière à pouvoir obturer au moins partiellement un premier desdits conduits de sortie d'air (12,14,16),
dans lequel les premier et deuxième échangeurs de chaleur (4,6) forment un angle compris dans un intervalle de 40° à 120°,
dans lequel le boîtier (2) est de forme allongée et dans lequel un pulseur et le premier échangeur de chaleur (4) sont alignés dans un axe transversal (Y) dudit boîtier (2),le pulseur et le deuxième échangeur de chaleur (6) étant alignés dans un axe transversal (Y) dudit boîtier (2), le premier et le deuxième échangeurs de chaleur (4, 6) étant alignés dans un axe longitudinal (X) dudit boîtier (2).

2. Dispositif (1) selon la revendication 1 dans lequel, le deuxième volet de distribution (22) est agencé de manière à pouvoir obturer le conduit de sortie d'air (14) configuré pour guider le flux d'air vers une buse de ventilation.

3. Dispositif (1) selon l'une des revendications 1 ou 2 dans lequel, un premier volet de distribution (20) comprenant un volet de type drapeau est agencé de manière à pouvoir obturer au moins partiellement un deuxième desdits conduits de sortie d'air (12,14,16).

4. Dispositif (1) selon la revendication 3 dans lequel, le deuxième conduit de sortie d'air (14) est configuré pour guider un flux d'air vers la buse des pieds.

5. Dispositif (1) selon l'une des revendications 1 à 4, dans lequel, un troisième volet de distribution (26) comprenant un volet de type papillon est agencé de manière à pouvoir obturer au moins partiellement un troisième desdits conduits de sortie d'air (12,14,16).

6. Dispositif (1) selon la revendication 5 dans lequel, le troisième conduit de sortie d'air (12,14,16) est configuré pour guider un flux d'air vers la buse de dégivrage.

7. Véhicule automobile **caractérisé en ce qu'**il comprend un dispositif (1) de chauffage, ventilation et/ou climatisation selon l'une des revendications précédentes.

## Patentansprüche

1. Heizungs-, Lüftungs- und/oder Klimatisierungsvorrichtung (1) für ein Kraftfahrzeug, welche ein einen Strömungskanal (3) für einen Luftstrom definierendes Gehäuse (2) umfasst, in welchem ein erster Wärmetauscher (4), ein zweiter Wärmetauscher (6), wobei der erste (4) und der zweite (6) Wärmetauscher in im Wesentlichen orthogonale Ebenen einbeschrieben sind, ein Umgehungsweg (28) des zweiten Wärmetauschers (6) und mindestens ein Luftauslasskanal (12, 14, 16) angeordnet sind, wobei jeder Luftauslasskanal (12, 14, 16) dafür ausgelegt ist, den Luftstrom insbesondere zu verschiedenen Bereiche eines Fahrzeuginnenraumes zu leiten, **dadurch gekennzeichnet, dass** eine Mischklappe (30), die eine Schiebetür umfasst, in dem Strömungskanal (3) so angeordnet ist, dass sie den Umgehungsweg (28) und/oder den zweiten Wärmetauscher (6) absperren kann, und eine zweite Verteilerklappe (22), die eine Schiebetür umfasst, so angeordnet ist, dass sie einen ersten der Luftauslasskanäle (12, 14, 16) wenigstens teilweise absperren kann, wobei der erste und der zweite Wärmetauscher (4, 6) einen Winkel bilden, der in einem Intervall von 40° bis 120° liegt, wobei das Gehäuse (2) von länglicher Form ist und wobei ein Gebläse und der erste Wärmetauscher (4) entlang einer Querachse (Y) des Gehäuses (2) ausgerichtet sind, wobei der Gebläse und der zweite Wärmetauscher ( 6) entlang einer Querachse (Y) des Gehäuses (2) ausgerichtet sind, während der erste und der zweite Wärmetauscher (4, 6) entlang einer Längsachse (X) des Gehäuses (2) ausgerichtet sind.

2. Vorrichtung (1) nach Anspruch 1, wobei die zweite Verteilerklappe (22) so angeordnet ist, dass sie den Luftauslasskanal (14) absperren kann, der dafür ausgelegt ist, den Luftstrom zu einer Lüftungsdüse zu leiten.

3. Vorrichtung (1) nach einem der Ansprüche 1 oder 2, wobei eine erste Verteilerklappe (20), die eine Fahnenklappe umfasst, so angeordnet ist, dass sie einen zweiten der Luftauslasskanäle (12, 14, 16) wenigstens teilweise absperren kann.

4. Vorrichtung (1) nach Anspruch 3, wobei der zweite Luftauslasskanal (14) dafür ausgelegt ist, einen Luftstrom zur Fußraumdüse zu leiten.

5. Vorrichtung (1) nach einem der Ansprüche 1 bis 4, wobei eine dritte Verteilerklappe (26), die eine Drosselklappe umfasst, so angeordnet ist, dass sie einen dritten der Luftauslasskanäle (12, 14, 16) wenigstens teilweise absperren kann.

6. Vorrichtung (1) nach Anspruch 5, wobei der dritte Luftauslasskanal (12, 14, 16) dafür ausgelegt ist, einen Luftstrom zur Defrosterdüse zu leiten.

7. Kraftfahrzeug, **dadurch gekennzeichnet, dass** es eine Heizungs-, Lüftungs- und/oder Klimatisierungsvorrichtung (1) nach einem der vorhergehenden Ansprüche umfasst.

## Claims

1. Heating, ventilation and/or air-conditioning device (1) for a motor vehicle, comprising a housing (2) defining a flow channel (3) for an air flow, in which are arranged a first heat exchanger (4), a second heat exchanger (6), the first (4) and the second (6) heat exchangers being inscribed in substantially orthogonal planes, a bypass path (28) of the second heat exchanger (6) and at least one air outlet duct (12, 14, 16), each air outlet duct (12, 14, 16) being configured to guide the air flow in particular toward different regions of a vehicle passenger compartment, **characterized in that** a mixing flap (30) comprising a sliding door is arranged in the flow channel (3) so as to be able to close the bypass path (28) and/or the second heat exchanger (6) and a second distribution flap (22) comprising a sliding door is arranged so as to be able to at least partially close a first of said air outlet ducts (12, 14, 16), wherein the first and second heat exchangers (4, 6) form an angle within a range of 40° to 120°, wherein the housing (2) is of elongate shape and wherein a blower and the first heat exchangers (4) are aligned in a transverse axis (Y) of said housing (2), wherein the blower and the second heat exchanger (4, 6) are aligned in a transverse axis (Y) of said housing (2), the first and the second heat exchangers (4, 6) being aligned in a longitudinal axis (X) of said housing (2).

2. Device (1) according to Claim 1, wherein the second distribution flap (22) is arranged so as to be able to close the air outlet duct (14) configured to guide the air flow toward a ventilation nozzle.

3. Device (1) according to one of Claims 1 or 2, wherein a first distribution flap (20) comprising a flag-type flap is arranged so as to be able to at least partially close a second of said air outlet ducts (12, 14, 16).

4. Device (1) according to Claim 3, wherein the second air outlet duct (14) is configured to guide an air flow toward the feet nozzle.

5. Device (1) according to one of Claims 1 to 4, wherein a third distribution flap (26) comprising a butterfly-type flap is arranged so as to be able to at least partially close a third of said air outlet ducts (12, 14, 16).

6. Device (1) according to Claim 5, wherein the third air outlet duct (12, 14, 16) is configured to guide an air flow toward the defrost nozzle.

7. Motor vehicle **characterized in that** it comprises a heating, ventilation and/or air-conditioning device (1) according to one of the preceding claims.
